# EUROPÄISCHE PATENTSCHRIFT

(11) **EP 2 918 453 B1**
(45) Veröffentlichungstag und Bekanntmachung des Hinweises auf die Patenterteilung: **16.05.2018**
(21) Anmeldenummer: 15156325.1
(22) Anmeldetag: 24.02.2015
(51) Int. Cl.: B60R 16/023

(54) **Schleppzug mit einem Schleppfahrzeug**
Trailer train with a tractor
Ensemble articulé doté d'un véhicule remorqueur

(30) Priorität: 03.03.2014 DE 102014102760
(43) Veröffentlichungstag der Anmeldung: 16.09.2015
(73) Patentinhaber: Jungheinrich Aktiengesellschaft, 22047 Hamburg (DE)
(72) Erfinder: Fischer, Andreas, 21335 Lüneburg (DE); Schmidt, Carsten, 21354 Bleckede (DE)
(74) Vertreter: Hauck Patentanwaltspartnerschaft mbB

(56) Entgegenhaltungen:
- EP-A2- 2 487 067
- DE-A1- 4 235 539
- DE-A1-102011 017 346
- DE-U1-202009 018 844

## Beschreibung

Die vorliegende Erfindung betrifft einen Schleppzug, der ein Schleppfahrzeug und einen oder mehrere geschleppte Anhänger aufweist, wobei das Schleppfahrzeug einen Notausschalter besitzt.

Schleppzüge werden in der Logistik eingesetzt und dienen beispielsweise als Routenzug, um einzelne Montagebereiche anzufahren und mit Bauteilen und Baugruppen für die Montage zu versorgen. Das zu verbauende Material und/oder die Bauteile werden in fahrbaren Wagen, Trolleys, auf Rollpalletten oder dergleichen transportiert. Die Wagen können an den Anhängern des Routenzugs dann eingehängt oder von dem Anhänger angehoben transportiert werden.

Im Hinblick auf die Sicherheit bei dem Einsatz von Schleppzügen besteht das Bedürfnis, die elektrischen Komponenten innerhalb eines Schleppzugs aufeinander abzustimmen und auch ein ausreichend sicheres Verhalten für den Fall des Notaus bereitzustellen.

Aus EP 2 487 067 A2 sind ein Trailerzuganhänger und ein Trailerzugsystem bekannt. Die Anhänger werden über eine Energieversorgungsverbindung mit dem Zugfahrzeug verbunden. Ferner ist eine bidirektionale Kommunikationsverbindung zwischen Schleppfahrzeug und Anhängern vorgesehen. Für einen autonomen Fahrbetrieb ist es bekannt, den Betrieb der Hubeinrichtung sowie einer Schubeinrichtung an den Anhängern während des Fahrbetriebs zu sperren.

Die Aufgabe wird durch eine Notausschnittstelle für einen Schleppzug mit den Merkmalen aus Anspruch 1 gelöst. Vorteilhafte Ausgestaltungen bilden die Gegenstände der Unteransprüche.

Erfindungsgemäß ist eine Notausschnittstelle für einen Schleppzug mit einem Schleppfahrzeug und einem oder mehreren Anhängern vorgesehen. Das Schleppfahrzeug besitzt einen Notaus-Schalter, der in an sich bekannter Art und Weise die elektrischen Verbraucher des Schleppfahrzeugs von der Spannungsversorgung trennt. Die Spannungsversorgung des einen oder der mehreren Anhänger erfolgt über die Notausschnittstelle, die hierzu bevorzugt elektrisch leitend mit dem Schleppfahrzeug und den Anhängern verbunden ist.

Erfindungsgemäß ist die Notausschnittstelle mit einer Nottrennung ausgestattet, die ansprechend auf den Notaus-Schalter an dem Schleppfahrzeug auch die Stromversorgung für den oder die Anhänger trennt. Die Nottrennung in der Notausschnittstelle bewirkt, dass bei einem Notstopp des Schleppfahrzeugs nicht nur dessen elektrische Verbraucher von der Spannungsversorgung getrennt werden, sondern auch der gesamte Schleppzug stromlos geschaltet wird. Hierdurch wird die Betriebssicherheit des Schleppzugs deutlich verbessert und es wird vermieden, dass in unvorhergesehenen Situationen zwar das Schleppfahrzeug mit Hilfe des Notaus-Schalters stromlos geschaltet wird, aber die elektrischen Verbraucher der Anhänger weiter elektrisch verbunden bleiben. Dies wird durch die Nottrennung mittels der Notausschnittstelle für die Anhänger vermieden.

In einer besonders bevorzugten Weiterbildung der Erfindung weist der Schleppzug mindestens einen Anhänger mit einem oder mehreren Notaus-Schaltern auf, wobei die Notausschnittstelle dazu ausgebildet ist, dass ein an dem Anhänger ausgelöstes Notaus-Signal des Notaus-Schalters alle über die Notausschnittstelle verbundene Anhänger stromlos schaltet. Bevorzugt schaltet das Notaus-Signal von einem Notaus-Schalter an dem Anhänger auch das Schleppfahrzeug stromlos, so als wäre der Notaus-Schalter des Schleppfahrzeugs betätigt worden.

In einer bevorzugten Ausgestaltung weist jeder der Anhänger zwei Notaus-Schalter auf, die mit der Notausschnittstelle verbunden sind. Bevorzugt sind diese Notausschalter am vorderen und hinteren Ende der Anhänger angeordnet.

In einer zweckmäßigen Ausgestaltung ist die Notausschnittstelle mit einem Spannungswandler ausgestattet, der eine an der Notausschnittstelle anliegende Eingangsspannung des Schleppfahrzeugs auf eine Nennspannung für den oder die Anhänger wandelt. Durch den Spannungswandler ist es leicht möglich, Schleppfahrzeuge verschiedener Hersteller mit Anhängern anderer Hersteller zu kombinieren.

Über die Notausschnittstelle erfolgt die elektrische Spannungsversorgung im Schleppzug und eine Notaus-Kette wird für den Schleppzug gebildet. Über die Notausschnittstelle kann auch eine Datenkommunikation zwischen den Anhängern und dem Schleppfahrzeug erfolgen. Bevorzugt weist die Notausschnittstelle hierzu Anschlüsse für Signalleitungen des oder der Anhänger sowie Anschlüsse für Signalleitungen des Schleppfahrzeugs auf. Über die Notausschnittstelle können dann Signale zwischen dem Schleppfahrzeug und dem Anhänger ausgetauscht werden, die eine entsprechende Kommunikation erlauben.

Bevorzugt weist die Notausschnittstelle eine Steuerung auf, die anliegende Signale des oder der Anhänger in ein BUS-fähiges Protokoll für das Schleppfahrzeug umsetzt. Eine solche Umsetzung schafft den Vorteil, dass über die Steuerung die an den Anhängern gesammelten Daten an den BUS und eine zentrale Steuerung des Schleppfahrzeugs weitergeleitet werden können.

In einer bevorzugten Ausgestaltung wird von dem Anhänger oder den Anhängern mindestens eines der folgenden Signale an das Schleppfahrzeug weitergeleitet:
- Lenkwinkel an einem der Anhänger,
- Status einer Hubvorrichtung an dem oder den Anhängern und
- Fehlersignale zu anhängerseitig aufgetretenen Fehlern.

Die weitergeleiteten Signale der Anhänger erlauben es an dem Schleppfahrzeug geeignete und notwendige Hinweise für eine Bedienperson zu geben. Im Übrigen können auch solche Größen, wie Lenkwinkel an einem der Anhänger, dazu genutzt werden, beispielsweise bei großen Lenkwinkeleinschlägen, die Fahrgeschwindigkeit der Schleppfahrzeuge zu reduzieren. Auch kann der Status einer Hubvorrichtung von einer Fahrzeugsteuerung des Schleppfahrzeugs dahingehend ausgewertet werden, dass beispielsweise ein Anfahren gesperrt ist, solange der Hubvorgang nicht abgeschlossen ist. Fehlersignale der Anhänger können ferner dazu genutzt werden, Warnsignale an dem Schleppfahrzeug anzuzeigen.

Bevorzugt ist die Notausschnittstelle als separate Baugruppe an einem direkt an dem Schleppfahrzeug angekoppelten Anhänger angeordnet. Auf diese Weise kann über eine einfache elektrische Kabelverbindung das Schleppfahrzeug mit der Notausschnittstelle verbunden werden.

In einer bevorzugten Weiterbildung weist der Schleppzug mehrere Anhänger auf, wobei jeder der Anhänger an seiner Vorder- und Rückseite, bezogen auf die Fahrtrichtung, elektrische Anschlüsse aufweist, die miteinander und mit den elektrischen Verbrauchern des jeweiligen Anhängers derart verbunden sind, dass eine an einem der Anschlüsse anliegende Versorgungsspannung an dem anderen Anschluss und den elektrischen Verbrauchern des Anhängers anliegt. Sie sind also in Serie an die Notausschnittstelle angeschlossen und werden gemeinsam über die Notausschnittstelle aus einer Stromversorgung in dem Schleppfahrzeug gespeist.

Nachfolgend wird ein Ausführungsbeispiel für einen Schleppzug näher erläutert.

Es zeigen:
- Fig. 1: den erfindungsgemäßen Schleppzug ohne Schleppfahrzeug mit einer Notausschnittstelle, die als separates Bauteil ausgebildet ist und

- Fig. 2: einen schematischen Schaltplan für einen Schleppzug, bei dem jeder Anhänger mit zwei Notaus-Schaltern ausgestattet ist.

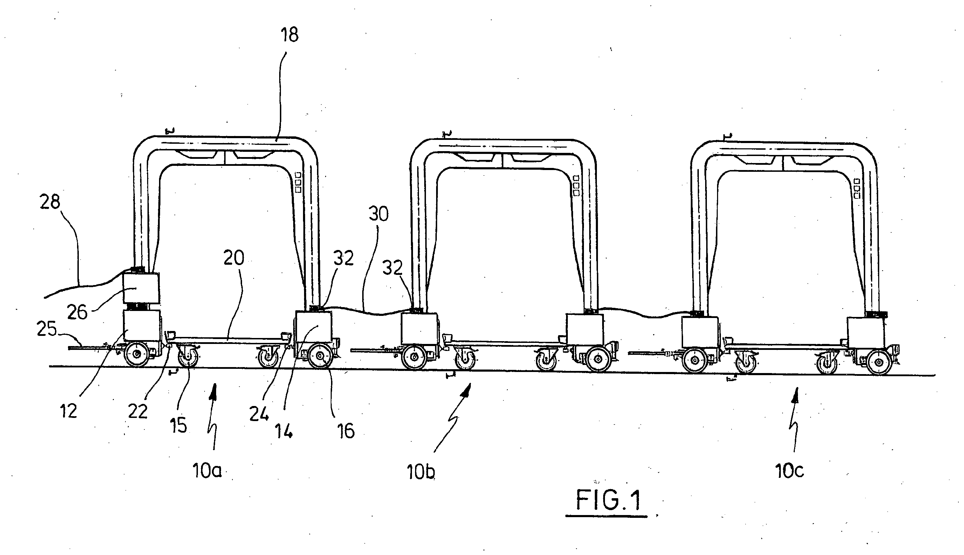

Figur 1 zeigt drei nicht aneinander gekoppelte Anhänger 10a, 10b, 10c. Jeder Anhänger besitzt einen vorderen Anhängerteil 12 und einen hinteren Anhängerteil 14. Jeder der Anhängerteile 12, 14 besitzt zwei Räder 16. Die Räder 16 können je nach Ausgestaltung des Anhängers lenkbar ausgebildet sein. Die Anhängerteile 12, 14 sind über einen portalförmigen Verbindungsbogen 18 aneinander gekoppelt.

Eine seitlich in den Anhänger 10 eingeschobene Rollpalette 20 wird zwischen den Anhängerteilen 12 und 14 in dem Schleppzug mitgeführt. Über Hubeinrichtungen 22, 24 an dem vorderen und hinteren Anhängerteil 12, 14 wird die Rollpalette 20 angehoben, so dass beim Transport die Räder 15 der Rollpalette bodenfrei sind.

Der Anhänger 10a ist vorgesehen, um an seiner Schleppdeichsel 25 mit dem Schleppfahrzeug (nicht dargestellt) verbunden zu werden. Eine als separates Bauteil ausgebildete Notausschnittstelle 26 ist an dem vorderen Anhängerteil 12 vorgesehen und über eine Leitung 28 mit dem Schleppfahrzeug (nicht dargestellt) verbunden.

Die Notausschnittstelle 26 ist dann an dem vorderen Anhängerteil 12 mit dem Antrieb für die Hubeinrichtung 22 verbunden. Über den portalförmigen Bogen 18 ist die Notausschnittstelle 26 auch mit den Verbrauchern im hinteren Anhängerteil 14 verbunden. Über die Leitung 30, die über Steckverbinder 32 zwischen die Anhänger 10a und 10b geschaltet ist, ist die Notausschnittstelle mit dem Anhänger 10a verbunden. Zudem wird die elektrische Spannung des Schleppfahrzeugs von dem Anhänger 10a an den Anhänger 10b weitergegeben.

Die Notausschnittstelle 26 erfüllt eine Reihe von Aufgaben. So ist die Notausschnittstelle 26 für die Sicherungstrennung aller Anhänger im Notaus-Fall vorgesehen. Hierzu sind ein oder mehrere Trennschütze in der Notausschnittstelle 26 vorgesehen. Ansprechend auf eine Betätigung des Notaus-Schalters am Schleppfahrzeug (nicht dargestellt) wird das Trennschütz der Notausschnittstelle 26 geöffnet und so die Anhänger in dem Routenzug stromlos geschaltet. Weiterhin kann das Portal 18 ebenfalls mit einem oder zwei Notaus-Schaltern ausgestattet sein, über die dann der Notaus-Schalter des Schleppfahrzeugs ausgelöst und/oder das Trennschütz in der Notausschnittstelle 26 geöffnet werden kann.

Zudem ist in der Notausschnittstelle 26 ein Spannungswandler für die Anhängerbetriebsspannung vorgesehen. Die Fahrzeuge werden häufig bei 48 V Nennspannung betrieben, während für die Anhänger eine Spannung von 24 V vorgesehen ist.

Auch können über die Leitungen 30 und die Notausschnittstelle Signale und Zustände der Anhänger gesammelt werden. Beispielsweise können die Lenkwinkel an dem Anhänger erfasst, der Status der Hubvorrichtung ermittelt und etwaige Fehler bei den Anhängern erfasst werden. Die von den einzelnen Anhängern an die Notausschnittstelle 26 weitergeleiteten Daten können hier im ersten Schritt ausgewertet und in ein geeignetes BUS-Protokoll, beispielsweise ein CAN-BUS-Protokoll, für das Schleppfahrzeug eingesetzt werden. Auf diese Weise werden die Daten für das Schleppfahrzeug zur Verfügung gestellt. Bei der Auswertung der Daten zu den Lenkwinkeln der einzelnen Anhänger kann beispielsweise der maximale Lenkwinkel weitergeleitet werden. Zu der Hubeinrichtung kann nur das Signal weitergeleitet werden, das beispielsweise eine im Betrieb befindliche Hubeinrichtung anzeigt.

Ein besonderer Vorteil der Notausschnittstellen liegt darin, dass diese ohne großen technischen Aufwand an Schleppfahrzeuge in den verschiedensten Ausgestaltungen und Protokollen angepasst werden können. Es ist auch vorstellbar, dass eine Anzahl von Schleppfahrzeugen bereits vorkonfiguriert in der Notausschnittstelle gespeichert ist und vor Ort entsprechend dem gerade eingesetzten Schleppfahrzeug ausgewählt werden kann. Dabei kann die Auswahl manuell oder automatisch erfolgen.

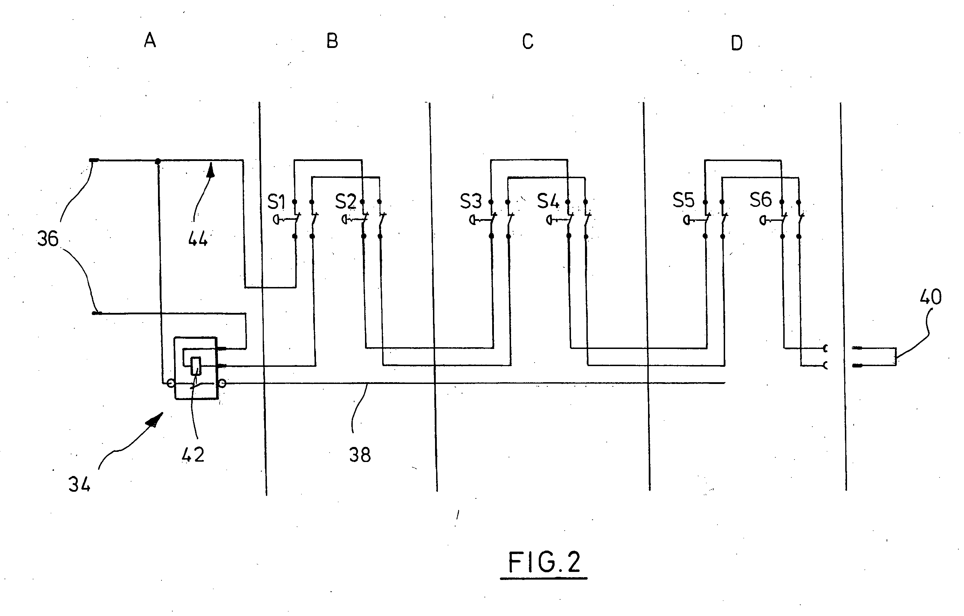

Fig. 2 zeigt eine konkrete Ausgestaltung einer Notausschnittstelle 34, die am Schleppfahrzeug angeordnet ist. Die Notausschnittstelle ist mit einer Spannungsversorgung 36 verbunden, die für eine sich von Fahrzeug zu Fahrzeug erstreckende Versorgungsleitung 38 für die elektrischen Verbraucher an den Anhängern sorgt. Die elektrische Versorgungsleitung 38 kann sich, wie beispielsweise in Fig. 1 dargestellt, als Leitung 30 zwischen den Anhängern erstrecken und auch einen vorderen Anhänger 10a mit dem Schleppfahrzeug verbinden.

In dem schematischen Schaltplan gemäß Fig. 1 bezeichnet der Abschnitt A Schaltungen, die am Schleppfahrzeug vorgesehen sind, während die Abschnitte B, C und D Schaltungen in den Anhängern bezeichnen. Jeder Anhänger ist mit zwei Notausschaltern S1 - S6 ausgestattet. Durch die Notausschalter wird die von dem Schleppfahrzeug ausgehende Spannungsversorgung 38 hin zu der Notausschnittstelle 34 unterbrochen. Um die Spannungsversorgung 38 in allen Anhängern unterbrechen zu können, ist ein Abschlussstecker 40 in dem Anhänger D vorgesehen. Der Abschlussstecker 40 verbindet die hinführende elektrische Versorgungsleitung mit der zurückführenden elektrischen Versorgungsleitung.

Die Notausschnittstelle schaltet nun über ein Schütz 42 die elektrische Spannungsversorgung 38 der Anhänger. Das Schütz 42 bildet die Nottrennung für die Versorgung der Anhänger. Liegt die elektrische Versorgungsspannung 36 an den Eingängen A1 und A2 der Notausschnittstelle 34 an, so ist das Schütz 42 geschlossen und die elektrische Versorgungsleitung 38 mit der Spannungsquelle 36 verbunden. Ist einer der Notaus-Schalter S1 bis S6 von den Anhängern betätigt, so entfällt die Spannung an den Eingängen A1 und A2, so dass das Schütz 42 betätigt wird und die elektrische Versorgungsspannung 38 unterbrochen ist. Bei dem in Fig. 2 dargestellten Schaltplan kann auch ein Ausschalter am Schleppfahrzeug leicht integriert werden, beispielsweise in dem Leitungsabschnitt 44, wo er genauso wirkt, wie die Notaus-Schalter S1 bis S6, um die Spannung an den Eingängen A1 und A2 zu trennen.

## Patentansprüche

1. Schleppzug mit einem Schleppfahrzeug und einem oder mehreren Anhängern, wobei das Schleppfahrzeug einen Notaus-Schalter besitzt, **dadurch gekennzeichnet, dass** eine Notausschnittstelle vorgesehen ist, über die die Spannungsversorgung des einen oder der mehreren Anhänger erfolgt, wobei eine Nottrennung vorgesehen ist, die ansprechend auf den Notaus-Schalter an dem Schleppfahrzeug die Stromversorgung für den oder die Anhänger trennt und dessen oder deren elektrischen Verbraucher stromlos schaltet.

2. Schleppzug nach Anspruch 1 für einen Schleppzug, **dadurch gekennzeichnet, dass** der mindestens eine Anhänger einen oder mehrere Notaus-Schalter aufweist, wobei die Schnittstelle dazu ausgebildet ist, dass ein an dem Anhänger ausgelöstes Notaus-Signal alle über die Notausschnittstelle verbundenen Anhänger stromlos schaltet.

3. Schleppzug nach Anspruch 2, **dadurch gekennzeichnet, dass** jeder Anhänger zwei Notaus-Schalter aufweist, die, bezogen auf die Schlepprichtung, auf einander gegenüberliegenden Seiten angeordnet sind.

4. Schleppzug nach Anspruch 2 oder 3, **dadurch gekennzeichnet, dass** ansprechend auf einen betätigten Notaus-Schalter an einem Anhänger ein Notaus-Signal an dem Schleppfahrzeug ausgelöst wird.

5. Schleppzug nach einem der Ansprüche 1 bis 4, **dadurch gekennzeichnet, dass** ein Spannungswandler vorgesehen ist, der eine an der Schnittstelle anliegende Eingangsspannung des Schleppfahrzeugs auf eine Nennspannung für den Anhänger wandelt.

6. Schleppzug nach einem der Ansprüche 1 bis 5, **dadurch gekennzeichnet, dass** an der Schnittstelle Anschlüsse für Signalleitungen des Anhängers oder der Anhänger und Anschlüsse für Signalleitungen des Schleppfahrzeugs vorgesehen sind, wobei über die Schnittstelle Signale zwischen dem Schleppfahrzeug und Anhänger(n) ausgetauscht werden können.

7. Schleppzug nach einem der Ansprüche 1 bis 6, **dadurch gekennzeichnet, dass** eine Steuerung vorgesehen ist, die anliegende Signale des oder der Anhänger in ein BUS-fähiges Protokoll für das Schleppfahrzeug umsetzt.

8. Schleppzug nach Anspruch 6 oder 7, **dadurch gekennzeichnet, dass** von dem Anhänger oder den Anhängern mindestens eines der folgenden Signale an das Schleppfahrzeug weitergeleitet wird:
- Lenkwinkel an mindestens einem der Anhänger,
- Status einer Hubeinrichtung an mindestens einem der Anhänger und
- Fehlersignale zu anhängerseitig aufgetretenen Fehlern.

9. Schleppzug nach einem der Ansprüche 1 bis 8, **dadurch gekennzeichnet, dass** die Notausschnittstelle als separates Bauteil an einem direkt an dem Schleppfahrzeug angekoppelten Anhänger angeordnet ist.

10. Schleppzug nach einem der Ansprüche 1 bis 9, **dadurch gekennzeichnet, dass** mehrere Anhänger von dem Schleppfahrzeug gezogen werden, wobei jeder Anhänger an seiner Vorder- und seiner Rückseite elektrische Anschlüsse aufweist, die miteinander und mit den elektrischen Verbrauchern des Anhängers derart verbunden sind, dass eine an einem der Anschlüsse anliegende Versorgungsspannung an dem anderen Anschluss und den Verbrauchern des jeweiligen Anhängers anliegt.

## Claims

1. A tow train with a tow tractor and one or several trailers, wherein the tow tractor has an emergency stop switch, **characterised in that** an emergency stop interface is provided, via which the power supply of the one or the several trailers takes place, an emergency cut-off being provided which cuts off the power supply for the one or the several trailers in reaction to the emergency stop switch on the tow tractor, and switches the electrical power consumers of it or of them to zero current.

2. The tow train according to claim 1 for one tow train, **characterised in that** the at least one trailer has one or several emergency stop switch(es), wherein the interface is made such that an emergency stop signal triggered on the trailer switches all the trailers connected via the interface to zero current.

3. The tow train according to claim 2, **characterised in that** each trailer has two emergency stop switches which are arranged at opposite sides with respect to the tow direction.

4. A tow train according to claim 2 or 3, **characterised in that** in reaction to an actuated emergency stop switch on a trailer, an emergency stop signal is triggered on the tow tractor.

5. A tow train according to one of the claims 1 to 4, **characterised in that** a voltage converter is provided, which converts an input voltage of the tow tractor present on the interface to a rated voltage for the trailer.

6. A tow train according to one of the claims 1 to 5, **characterised in that** contacts for signal lines of the trailer or the trailers and contacts for signal lines of the tow tractor are provided on the interface, wherein signals between the tow tractor and trailers(s) can be exchanged via the interface.

7. A tow train according to one of the claims 1 to 6, **characterised in that** a control device is provided which converts applied signals of the trailer or the trailers to a BUS compatible protocol for the tow tractor.

8. A tow train according to claim 6 or 7, **characterised in that** at least one of the following signals is forwarded to the tow tractor by the trailer or the trailers:
• steering angle on at least one of the trailers,
• condition of a lifting device on at least one of the trailers, and
• error signals concerning errors occurred at the trailer side.

9. A tow train according to one of the claims 1 to 8, **characterised in that** the emergency stop interface is arranged as a separate component on a trailer which is directly coupled to the tow tractor.

10. A tow train according to one of the claims 1 to 9, **characterised in that** plural trailers are towed by the tow tractor, wherein each trailer has electric contacts at its front side and its rear side, which are connected between each other and with the electric consumers of the trailer such that a power supply voltage applied to one of the contacts is also applied to the other contact and the consumers of the respective trailer.

## Revendications

1. Train de chariots avec un tracteur de remorquage et une ou plusieurs remorques, dans lequel le tracteur de remorquage a un interrupteur d'arrêt d'urgence, **caractérisé en ce que** une interface d'arrêt d'urgence est prévue, à travers laquelle se fait l'alimentation électrique de l'une ou des plusieurs remorques, un débranchement d'urgence étant prévu qui débranche l'alimentation électrique pour l'une ou les remorque(s) en fonction de l'interrupteur d'arrêt d'urgence sur le tracteur de remorquage, et met les consommateurs électriques de l'une ou des plusieurs remorque(s) hors tension.

2. Train de chariots selon la revendication 1 pour un train de chariots, **caractérisé en ce que** l'au moins une remorque comporte un ou plusieurs interrupteur(s) d'arrêt d'urgence, dont l'interface est formée tellement qu'un signal d'arrêt d'urgence déclenché sur la remorque met toutes les remorques reliées à travers l'interface d'arrêt d'urgence hors tension.

3. Train de chariots selon la revendication 2, **caractérisé en ce que** chaque remorque a deux interrupteurs d'arrêt d'urgence qui sont arrangés dans des cotés opposés par rapport au sens de traction.

4. Train de chariots selon la revendication 2 ou 3, **caractérisé en ce que** en réaction à un interrupteur d'arrêt d'urgence actionné dans une remorque, un signal d'arrêt d'urgence est déclenché dans le tracteur de remorquage.

5. Train de chariots selon une des revendications 1 à 4, **caractérisé en ce que** un convertisseur de tension est prévu qui convertit une tension d'entrée du tracteur de remorquage présente sur l'interface à une tension nominale pour la remorque.

6. Train de chariots selon une des revendications 1 à 5, **caractérisé en ce que** des bornes pour lignes de signal de la remorque ou des remorques et des bornes pour lignes de signal du tracteur de remorquage sont prévues sur l'interface, des signaux entre le tracteur de remorquage et remorques(s) pouvant être échangés à travers l'interface.

7. Train de chariots selon une des revendications 1 à 6, **caractérisé en ce que** un dispositif de commande est prévu qui convertit des signaux présents de la ou des remorque(s) à un protocole BUS-compatible pour le tracteur de remorquage.

8. Train de chariots selon la revendication 6 ou 7, **caractérisé en ce que** au moins un des signaux suivants est redirigé au tracteur de remorquage par la remorque ou les remorques:
• angle de braquage sur au moins une des remorques,
• état d'un dispositif de levage sur au moins une des remorques, et
• signaux d'erreur concernant des erreurs apparues au coté remorque.

9. Train de chariots selon une des revendications 1 à 8, **caractérisé en ce que** l'interface d'arrêt d'urgence est arrangée comme un composant séparé sur une remorque directement accouplée au tracteur de remorquage.

10. Train de chariots selon une des revendications 1 à 9, **caractérisé en ce que** plusieurs remorques sont traînées par le tracteur de remorquage, chaque remorque ayant des contacts électriques dans ses côtés de front et d'arrière qui sont reliés l'un avec l'autre et avec les consommateurs électriques de la remorque tellement qu'une tension d'alimentation appliquée à un des contacts est aussi appliquée sur l'autre contact et les consommateurs de la remorque respective.
